# EUROPÄISCHE PATENTSCHRIFT

(11) **EP 3 433 109 B1**
(45) Veröffentlichungstag und Bekanntmachung des Hinweises auf die Patenterteilung: **20.03.2024**
(21) Anmeldenummer: 17712748.7
(22) Anmeldetag: 21.03.2017
(51) Int. Cl.: B44C 5/04, B32B 3/14

(54) **VERFAHREN ZUR HERSTELLUNG EINES LAMINATS**
METHOD FOR PRODUCING A LAMINATE
PROCÉDÉ DE PRODUCTION D'UN STRATIFIÉ

(30) Priorität: 22.03.2016 DE 102016105379
(43) Veröffentlichungstag der Anmeldung: 30.01.2019
(73) Patentinhaber: Fritz Egger GmbH & Co. OG, 6380 St. Johann in Tirol (AT)
(72) Erfinder: FISCHER, Klaus, 57319 Bad Berleburg (DE)
(74) Vertreter: Cohausz & Florack
(86) Internationale Anmeldenummer: PCT/EP2017/056614
(87) Internationale Veröffentlichungsnummer: WO 2017/162620

(56) Entgegenhaltungen:
- EP-A1- 2 695 746
- DE-C1- 19 602 064
- US-A1- 2004 045 240

## Beschreibung

Die Erfindung betrifft ein Verfahren zur Herstellung eines Laminats, insbesondere eines Holzwerkstofflaminats, bei dem ein zu verpressender Stapel bereitgestellt wird, indem mindestens eine Substratlage und eine Dekorpapierlage übereinander angeordnet werden, und bei dem der Stapel zu einem Laminat verpresst wird.

Laminate, insbesondere Holzwerkstofflaminate, werden zum Beispiel zur Herstellung von Möbelteilen oder Fußbodenpaneelen eingesetzt. Bei der Herstellung solcher Laminate wird typischerweise ein bedruckter Dekorpapierbogen auf eine Substratplatte, beispielsweise auf eine Holzwerkstoffplatte, aufgelegt und mit dieser verpresst. Für die Substratplatten und Dekorpapierbögen hat sich in der Industrie ein Standardmaß mit einer Länge zwischen 5,2 und 5,7 m und einer Breite zwischen 2 und 2,1 m durchgesetzt, das auch als Ganzformat bezeichnet wird. Da das Ganzformat kein offizieller Standard ist, können die genaue Länge und Breite der Ganzformate von Hersteller zu Hersteller leicht variieren, liegen aber standardmäßig in den zuvor angegebenen Bereichen.

Die Dekorpapiere werden typischerweise im Walzenauftrag bedruckt. Zu diesem Zweck werden Druckwalzen verwendet, auf deren Oberfläche das aufzudruckende Dekor eingraviert ist. Beim Drucken wird Druckfarbe auf die Walze aufgebracht und durch die Druckwalze auf das Papier übertragen. Zur Herstellung eines farbigen Dekorpapiers werden typischerweise mehrere hintereinander angeordnete Druckwalzen verwendet, um verschiedene Grundfarben auf das Papier aufzubringen, die zusammen das gewünschte Dekor ergeben.

Die Herstellung von Dekorpapieren durch Walzendruck hat den Nachteil, dass sich das Dekorbild nach einmaligem Umlauf der Walze wiederholt. Da die Druckwalzen aus technischen Gründen und Praktikabilitätsgründen nicht beliebig groß ausgebildet werden können, wiederholt sich das Dekorbild mehrfach auf einem Dekorpapier im Ganzformat. Typischerweise weisen die heutzutage verwendeten Walzen einen Umfang von 1,3 m auf, so dass sich das Dekorbild auf der Länge des Ganzformats viermal wiederholt.

Dies führt jedoch dazu, dass aus den Laminaten hergestellte Fußbodenpaneele häufig ein identisches oder teilweise identisches Dekor aufweisen. Ein Fußbodenbelag, der aus Fußbodenpaneelen mit sich häufig wiederholenden Dekorbildern gebildet ist, wirkt jedoch häufig unnatürlich und es ist für den Betrachter schnell ersichtlich, dass es sich nicht um einen Holzfußboden aus gewachsenem Holz handelt.

Ein Ansatz, um dieses Problem zu überwinden, besteht im Digitaldruck. Da das Druckbild beim Digitaldruck nicht an die Größe einer Walze gebunden ist, können für den Druck im Prinzip beliebig große Dekorbildvorlagen verwendet werden, ohne dass sich das Dekorbild wiederholt. Dadurch wäre es im Prinzip möglich, ein Laminat im Ganzformat herzustellen, dass nur wenige oder auch keine Dekorbildwiederholungen aufweist, vergleichbar mit einem Parkett- oder Echtholzfurnierboden.

Aus der WO 2010/000405 A1 ist ein Verfahren zum Bedrucken von Druckpapier mit einer Ganzformatbreite von 2,07 m von der Rolle im Digitaldruck bekannt.

In der Praxis hat sich der Digitaldruck bisher allerdings als nicht praktikabel herausgestellt. Zwar gibt es digitale Plotter, die Papierbögen in Ganzformatbreite mit einem Dekorbild bedrucken können. Diese Plotter erreichen jedoch maximal Druckleistungen von etwa 300 m² pro Stunde. Demgegenüber kann beim Walzendruck eine Druckleistung von 30.000 m² pro Stunde erreicht werden. Der Digitaldruck ist gegenüber dem Walzendruck damit nicht wirtschaftlich einsetzbar.

Zwar gibt es auch schnellere Digitaldrucker mit höherer Druckleistung; diese sind jedoch nicht in der erforderlichen Breite verfügbar, so dass mit diesen Druckern keine Dekorpapierbögen für Ganzformate hergestellt werden können. Da sich das Ganzformat industriell als Standard durchgesetzt hat, ist es auch nicht möglich, stattdessen kleinere Formate zu verwenden.

Aus der US 2004/0045240 A1 ist ein Laminatfußboden mit kundenspezifischem Bild bekannt, bei dessen Herstellung mehrere bedruckte Papierbögen auf einem Basismaterial angeordnet werden können.

Vor diesem Hintergrund liegt der vorliegenden Erfindung die Aufgabe zu Grunde, ein Verfahren zur wirtschaftlichen Herstellung eines Laminats sowie ein entsprechend hergestelltes Laminat mit weniger oder ohne Dekorbildwiederholungen zur Verfügung zu stellen.

Diese Aufgabe wird bei einem Verfahren zur Herstellung eines Laminats, insbesondere Holzwerkstofflaminats, bei dem ein zu verpressender Stapel bereitgestellt wird, indem mindestens eine Substratlage und eine Dekorpapierlage übereinander angeordnet werden und bei dem der Stapel zu einem Laminat verpresst wird, erfindungsgemäß zumindest teilweise dadurch gelöst, dass die Dekorpapierlage dadurch bereitgestellt wird, dass mindestens zwei bedruckte Dekorpapierbögen oder Dekorpapierbahnen nebeneinander angeordnet werden, wobei die mindestens zwei Dekorpapierbögen bzw. mindestens zwei Dekorpapierbahnen mittels Digitaldruck bedruckt sind, so dass die Substratlage im Wesentlichen vollflächig mit einem digitalbedruckten Dekor versehen wird.

Es wurde erkannt, dass sich Laminate mit vollflächig individuellem Dekor wirtschaftlich dadurch herstellen lassen, dass zwei durch Digitaldruck bedruckte Dekorpapierbögen bzw. Dekorpapierbahnen nebeneinander angeordnet werden, um die Substratlage möglichst vollflächig mit Dekorpapier verpressen zu können. Dadurch können insbesondere Substratlagen mit Ganzformat-Breite im Wesentlichen vollflächig, ggf. mit einem geringen Spaltmaß zwischen den Dekorpapierbögen bzw. - bahnen, mit einem digitalbedruckten Dekor versehen werden. Bei dem Dekor kann es sich beispielsweise um ein Holzdekor handeln. Da pro hergestelltem Laminat mindestens zwei Dekorpapierbögen oder -bahnen verwendet werden, reduziert sich die Breite der einzelnen Dekorpapierbögen bzw. -bahnen, so dass die schmaleren Dekorpapierbögen bzw. -bahnen mit Digitaldruckern bedruckt werden können, die einen erheblich höheren Durchsatz aufweisen, als die für große Papierbreiten ausgelegten Digitalplotter.

Das Verfahren dient zur Herstellung eines Laminats, insbesondere eines Holzwerkstofflaminats. Unter einem Laminat wird ein Mehrschichtprodukt verstanden, das durch Verpressen einer Substratlage mit mindestens einer weiteren Lage, insbesondere einer Papierlage, hergestellt wird. Derartige Laminate, insbesondere Holzwerkstofflaminate, werden vor allem im Möbelbau und insbesondere für die Herstellung von Paneelen, insbesondere Fußboden-, Wand- oder Deckenpaneelen verwendet.

Bei dem Verfahren wird ein zu verpressender Stapel bereitgestellt, indem mindestens eine Substratlage und eine Dekorpapierlage übereinander angeordnet werden. Bei der Substratlage kann es sich insbesondere um eine Holzwerkstoffplatte handeln, beispielsweise um eine Spanplatte oder eine Faserplatte, wie zum Beispiel eine MDF- oder HDF-Platte. Ebenso können für die Substratlage andere Werkstoffe verwendet werden, zum Beispiel aus Kunststoffen oder aus Kunststoffgemischen mit Holz- und/oder Papierfaseranteilen, wie zum Beispiel WPC (wood-plastic-composite)-Werkstoffe, oder auch Mineralstoffanteilen.

Weiterhin sind für die Substratlage auch Werkstoffe auf Basis von Kunstharz enthaltenden Papierlagen, insbesondere Schichtstoffe oder Kompaktplatten, verwendbar. So kann für die Substratlage insbesondere auch ein sogenanntes Imprägnat verwendet werden. Unter einem Imprägnat wird vorliegend ein Papiersubstrat verstanden, das mit einem Harz imprägniert und vorzugsweise anschließend getrocknet wurde. Bei dem Harz kann es sich beispielsweise um ein Aminoharz, insbesondere Melaminharz oder Harnstoffharz, ein Polyurethanharz, ein Acrylharz oder Mischungen daraus handeln. Auf diese Weise lassen sich mit dem beschriebenen Verfahren beispielsweise Hochdruckschichtstoffe und insbesondere auch kontinuierlich hergestellte Laminate herstellen, die beispielsweise in der Möbelindustrie Anwendung finden.

Für die Substratlage kommen im Prinzip auch keramische Werkstoffe in Betracht.

Unter einem Dekorpapier wird Papier verstanden, das mit einem Dekor versehen ist. Unter einem Dekor wird eine Gestaltung einer Oberfläche durch Farben und Muster verstanden. Das Dekor eines Dekorpapiers gibt damit das optische Erscheinungsbild des herzustellenden Laminats vor. Unter einem Dekorbild wird vorliegend ein Bild vorgegebener Größe, insbesondere mit vorgegebenen Strukturen, Mustern und/oder Farben verstanden, das für ein Dekor verwendet wird. Ist die mit dem Dekor zu versehene Oberfläche größer als das Dekorbild, so wird das Dekorbild im Dekor typischerweise mehrfach wiederholt, bis die gesamte mit Dekor zu versehende Oberfläche ausgefüllt ist. Diese Wiederholungen werden vorliegend als Dekorbildwiederholungen bezeichnet. Mit anderen Worten wird unter Dekorbildwiederholungen verstanden, dass ein Dekor mehrere identische Dekorabschnitte aufweist, d.h. dass ein Dekorbild oder Teile davon mehrfach im Dekor auftreten.

Die Breite des Stapels wird durch die Breite der Substratlage vorgegeben. Die Breite der Dekorpapierlage ist erfindungsgemäß an die Breite der Substratlage angepasst, so dass die Dekorpapierlage die Substratlage im Wesentlichen in voller Breite überdeckt. Die Substratlage kann beispielsweise eine rechteckige Form mit einer vorgegebenen Länge und einer vorgegebenen Breite aufweisen. In diesem Fall ist auch die Länge der Dekorpapierlage vorzugsweise an die Länge und Breite der Substratlage angepasst, so dass die Dekorpapierlage die Substratlage im Wesentlichen vollflächig überdeckt. Bei der Substratlage kann es sich auch um eine quasi kontinuierliche Substratlage mit vorgegebener Breite und beliebiger bzw. unbestimmter Länge handeln, beispielsweise aus hintereinander angeordneten Substratplatten oder aus einer kontinuierlichen, vorzugsweise imprägnierten Papierbahn. In diesem Fall wird die Dekorpapierlage vorzugsweise ebenfalls als kontinuierliche Dekorpapierlage mit entsprechender Breite bereitgestellt.

Die Substratlage und die Dekorpapierlage werden zu einem Stapel übereinander angeordnet. Zusätzlich können auch noch weitere Lagen, wie zum Beispiel eine Overlaypapierlage, vorgesehen werden. Auch zwischen der Substratlage und der Dekorpapierlage können eine oder mehrere weitere Lagen, sogenannte Underlaylagen, angeordnet werden.

Um die einzelnen Lagen des Stapels beim nachfolgenden Verpressen fest miteinander verbinden zu können, ist insbesondere mindestens eine Lage des Stapels mit einem Harz versehen. Insbesondere kann es sich bei dem Dekorpapier um ein mit Harz imprägniertes Dekorpapier handeln. Als Harz kommt beispielsweise ein Aminoharz, insbesondere Melaminharz oder Harnstoffharz, ein Polyurethanharz, insbesondere wässriges Polyurethanharz, ein Acrylharz oder Mischungen daraus in Betracht.

Bei dem Verfahren wird der Stapel zu einem Laminat verpresst, wobei die einzelnen Lagen des Stapels insbesondere durch ein Harz miteinander verklebt werden. Vorzugsweise führt das Verpressen zu einem Aushärten des Harzes, so dass die einzelnen Lagen dauerhaft und fest miteinander verbunden werden. Auf diese Weise ergibt sich ein zusammenhängendes Laminat, also ein mehrschichtiges Bauteil, in dem die einzelnen Schichten fest miteinander verbunden sind. Um einen festen Verbund der einzelnen Schichten zu erreichen bzw. das Aushärten eines Harzes herbeizuführen, erfolgt das Verpressen vorzugsweise unter Druck- und Temperatureinwirkung. Das Verpressen kann beispielsweise in einer Kurztaktpresse oder auch in einer kontinuierlichen Durchlaufpresse, insbesondere in einer Bandpresse, erfolgen.

Die unverpressten Bestandteile des Stapels werden vorliegend jeweils als Lagen und die verpressten Bestandteile des Laminats jeweils als Schichten bezeichnet.

Bei dem Verfahren wird die Dekorpapierlage dadurch bereitgestellt, dass mindestens zwei bedruckte Dekorpapierbögen oder Dekorpapierbahnen nebeneinander angeordnet werden, wobei die mindestens zwei Dekorpapierbögen bzw. die mindestens zwei Dekorpapierbahnen mittels Digitaldruck bedruckt sind. Die Dekorpapierlage wird demnach aus mehreren einzelnen Dekorpapierbögen bzw. Dekorpapierbahnen zusammengesetzt, indem die einzelnen Dekorpapierbögen bzw. - bahnen zu einer größeren Dekorpapierlage nebeneinander gelegt werden. Die einzelnen Dekorpapierbögen bzw. -bahnen weisen daher insbesondere eine geringere Breite auf als die Breite der gesamten Dekorpapierlage. Beispielsweise können zwei Dekorpapierbögen oder -bahnen mit jeweils der halben Breite der Dekorpapierlage nebeneinander angeordnet werden, so dass sie die gesamte Breite der Dekorpapierlage überdecken.

Unter einem Dekorpapierbogen wird vorliegend ein zusammenhängendes Stück Dekorpapier vorgegebener Größe verstanden. Unter einer Dekorpapierbahn wird vorliegend eine zusammenhängende, kontinuierliche Bahn Dekorpapier mit vorgegebener Breite verstanden. Dadurch, dass die Dekorpapierbögen bzw. -bahnen eine geringere Breite aufweisen als die Dekorpapierlage, ist es möglich, das Dekor der Dekorpapierbögen bzw. -bahnen mit verfügbaren Digitaldruckern aufzubringen, die eine ausreichende Druckgeschwindigkeit für eine wirtschaftliche Produktion aufweisen.

Das mit dem beschriebenen Verfahren hergestellte Laminat hat vorzugsweise Ganzformat und weist ein Dekor mit möglichst wenigen Dekorbildwiederholungen, vorzugsweise keinen Dekorbildwiederholungen auf.

Aus einem solchen Laminat lässt sich ein Satz von Paneelen, beispielsweise Fußbodenpaneelen herstellen, die möglichst wenige Paneele mit identischen oder teilweise identischen Dekoranteilen aufweisen. Mit einem solchen Satz von Paneelen kann daher ein Fußboden verlegt werden, der möglichst wenige Dekorbildwiederholungen und daher eine möglichst natürliche Optik aufweist. Der Satz von Paneelen kann beispielsweise in einem Paket konfektioniert sein.

Im Folgenden werden verschiedene Ausführungsformen des Verfahrens beschrieben. Die einzelnen Ausführungsformen können zudem beliebig untereinander kombiniert werden.

Bei einer ersten Ausführungsform weisen die mindestens zwei Dekorpapierbögen jeweils ein Dekor ohne Dekorbildwiederholungen auf. Die einzelnen Dekorpapierbögen weisen demnach jeweils ein Dekor auf, das keine Dekorbildabschnitte aufweist, die auf demselben Dekorpapierbogen mehrfach auftreten. Bei einer entsprechenden Ausführungsform weisen die mindestens zwei Dekorpapierbahnen auf einer Länge von mindestens 2 m, vorzugsweise von mindestens 5,2 m jeweils ein Dekor ohne Dekorbildwiederholungen auf. Auf diese Weise können die Dekorbildwiederholungen der gesamten Dekorlage des hergestellten Laminats reduziert werden.

Bei einer weiteren Ausführungsform sind die Dekore der mindestens zwei Dekorpapierbögen so gewählt, dass auf der Dekorpapierlage keine Dekorbildwiederholungen auftreten. Demnach treten Dekorabschnitte eines der Dekorpapierbögen nicht nur nicht mehrfach auf demselben Dekorpapierbogen auf, sondern auch nicht auf dem mindestens einen weiteren Dekorpapierbogen. Bei einer entsprechenden Ausführungsform sind die Dekore der mindestens zwei Dekorpapierbahnen so gewählt, dass auf der Dekorpapierlage über eine Länge von mindestens 5,2 m keine Dekorbildwiederholungen auftreten. Indem die Dekore der mehreren, nebeneinander anzuordnenden Dekorpapierbögen bzw. -bahnen aufeinander abgestimmt werden, so dass auch Bogen- bzw. Bahn-übergreifend keine Dekorbildwiederholungen auftreten, können Dekorbildwiederholungen auf der gesamten Dekorpapierlage des hergestellten Laminats zumindest über die Länge des Ganzformats vermieden werden.

Bei einer weiteren Ausführungsform werden die Dekorpapierbögen bzw. Dekorpapierbahnen durch ein Verfahren bereitgestellt, bei dem eine Papierbahn durch einen Digitaldrucker mit einem Dekorbild bedruckt wird, das eine Dekorbildlänge von mindestens 2,6 m, vorzugsweise von mindestens 5,2 m, besonders bevorzugt von mindestens 10,4 m aufweist. Die Dekorbildlänge kann insbesondere etwa ein Vielfaches der halben Ganzformatlänge, beispielsweise ein Vielfaches von 2,6 m, betragen. Für die Verwendung von Dekorpapierbögen kann die dadurch entstehende Dekorpapierbahn zu Dekorpapierbögen abgelängt, insbesondere geschnitten werden. Unter der Dekorbildlänge wird die Länge des Dekorbilds verstanden, d.h. der Abstand auf der Dekorpapierbahn, in dem sich ein gedrucktes Dekorbild wiederholt. Da die bei der Herstellung von Dekorpapier verwendete Papierbahn eine erheblich größere Länge hat, als ein für das Dekor verwendetes Dekorbild, wird das Dekorbild vom Digitaldrucker mehrfach hintereinander gedruckt, um die Papierbahn kontinuierlich bedrucken zu können. Die Dekorbildlänge entspricht demnach der Länge eines gedruckten Dekorbildes auf der Papierbahn.

Durch eine Dekorbildlänge von vorzugsweise mindestens 2,6 m, vorzugsweise mindestens 5,2 m wird erreicht, dass sich eine Dekorbildlänge im Wesentlichen über die halbe, vorzugsweise die gesamte Ganzformatlänge erstreckt. Dadurch kann ein Dekorpapierbogen bzw. -band in Ganzformatlänge ohne Dekorbildwiederholungen hergestellt werden. Durch eine Dekorbildlänge von mindestens 10,4 m können sogar zwei Dekorpapierbögen in Ganzformatlänge hintereinander hergestellt werden, ohne dass auf den jeweiligen Dekorpapierbögen und auf der Gesamtheit beider Dekorpapierbögen Dekorbildwiederholungen auftreten. Auf diese Weise hergestellte Dekorpapierbögen werden vorzugsweise verwendet, um nebeneinander angeordnet die Dekorpapierlage des Stapels zu bilden.

Bei einer weiteren Ausführungsform wird die Substratlage dadurch bereitgestellt, dass mindestens zwei Substratplatten, beispielsweise Holzwerkstoffplatten, hintereinander angeordnet werden. Die Substratlage kann demnach mehrere Substratplatten umfassen. Beispielsweise können zwei Substratplatten im Halbformat zu einer Substratlage im Ganzformat zusammengelegt werden. Unter dem Halbformat wird das in der Länge halbierte Ganzformat verstanden, also ein Format mit einer Länge zwischen 2,6 und 2,85 m und einer Breite zwischen 2 und 2,1 m.

Alternativ kann für die Substratlage auch eine einzelne Substratplatte verwendet werden, die die entsprechende Länge und Breite aufweist, insbesondere eine Substratplatte mit der Länge und Breite des Ganzformats.

Bei einer weiteren Ausführungsform wird der Stapel kontinuierlich bereitgestellt, indem eine kontinuierlich bereitgestellte Substratlage und eine kontinuierlich bereitgestellte Dekorpapierlage übereinander angeordnet werden.

Die kontinuierlich bereitgestellte Substratlage kann beispielsweise dadurch bereitgestellt werden, dass eine Mehrzahl von Substratplatten hintereinander angeordnet werden. Die Substratplatten werden vorzugsweise auf Stoß hintereinander angeordnet, so dass die Kanten der Substratplatten einander berühren oder höchstens einen kleinen Abstand, von vorzugsweise wenigen Millimetern, auseinander liegen. Zwischen den Kanten der Substratplatten kann auch gezielt ein kleiner Abstand eingestellt werden, um ein unregelmäßiges Papierwachstum beim Imprägnieren auszugleichen.

Alternativ kann als kontinuierliche Substratlage auch eine vorzugsweise imprägnierte Papierbahn bereitgestellt werden, also ein sogenanntes Imprägnat. Die kontinuierlich bereitgestellte Dekorpapierlage wird vorzugsweise dadurch bereitgestellt, dass mindestens zwei mittels Digitaldruck bedruckte Dekorpapierbahnen nebeneinander angeordnet werden. Der kontinuierlich bereitgestellte Stapel wird vorzugsweise kontinuierlich in einer Durchlaufpresse, insbesondere in einer Bandpresse, verpresst. Auf diese Weise ist eine kontinuierliche Herstellung des Laminats möglich. Bei den Dekorpapierbahnen kann es sich beispielsweise um bedruckte Papierbahnen handeln, die von einer Rolle abgewickelt werden.

Bei einer weiteren Ausführungsform wird der zu verpressende Stapel bereitstellt, indem mindestens eine Substratlage, eine Dekorpapierlage und mindestens eine weitere Papierlage übereinander angeordnet werden, wobei die weitere Papierlage einen Papierbogen aufweist, der sich über die mindestens zwei Dekorpapierbögen erstreckt, bzw. eine Papierbahn aufweist, die sich über die mindestens zwei Dekorpapierbahnen erstreckt. Bei der weiteren Papierlage kann es sich insbesondere um eine unbedruckte Overlay-Papierlage handeln oder um eine bedruckte Overlay-Papierlage, die mit einem anderen Druckverfahren, beispielsweise mit einem Walzendruckverfahren, bedruckt wurde. Ein Papierbogen, der nicht im Digitaldruck, sondern im Walzendruckverfahren bedruckt ist, kann ohne weiteres mit guten Druckgeschwindigkeiten in einer größeren Breite bereitgestellt werden, als die im Digitaldruck bedruckten Dekorpapiere. Grundsätzlich können aber auch mit Digitaldruck versehene Overlay-Papierlagen verwendet werden.

Durch einen sich über mindestens zwei Dekorpapierbögen erstreckenden Papierbogen kann der Stapel stabilisiert werden, so dass einzelne Komponenten des Stapels sich nicht gegeneinander verschieben, zum Beispiel beim Transport zu einer anschließenden kontinuierlichen Durchlauf- oder Kurztaktpresse. Weiterhin fördert ein sich über mindestens zwei Dekorpapierbögen erstreckender Papierbogen den Zusammenhalt des fertigen Laminats.

Bei einer weiteren Ausführungsform ist eine der mindestens einen weiteren Papierlage eine Gegenzugpapierlage, die auf der der Dekorpapierlage abgewandten Seite der Substratlage angeordnet ist. Auf diese Weise kann der Stapel stabilisiert werden, und zwar insbesondere dann, wenn die Substratlage mindestens zwei hintereinander angeordnete Substratplatten umfasst. In diesem Fall führt der Papierbogen bzw. die Papierbahn der Gegenzugpapierlage zudem zu einem besseren Zusammenhalt des hergestellten Laminats, insbesondere an der Stoßkante der mindestens zwei Substratplatten.

Der Papierbogen bzw. die Papierbahn der Gegenzugpapierlage ist vorzugsweise mit Harz imprägniert, um ein Verziehen des Laminats zu verhindern.

Bei einer weiteren Ausführungsform ist die mindestens eine weitere Papierlage eine Overlaypapierlage, die auf der der Substratlage abgewandten Seite der Dekorpapierlage und somit oberhalb der Dekorpapierlage angeordnet ist. Durch den Papierbogen der Overlaypapierlage kann die Position der mindestens zwei nebeneinander angeordneten Dekorpapierbögen bzw. -bahnen zueinander fixiert werden, insbesondere beim Transport des Stapels. Weiterhin führt der Papierbogen der Overlaypapierlage zu einem besseren Zusammenhalt des hergestellten Laminats, insbesondere an der Stoßkante der mindestens zwei Dekorpapierbögen bzw. -bahnen. Die Overlaypapierlage kann mit einem Harz imprägniert sein. Weiterhin kann die Overlaypapierlage abriebfeste Partikel aufweisen, so dass ein abriebfestes Laminat, beispielsweise für Fußbodenpaneele hergestellt werden kann.

Bei einer weiteren Ausführungsform werden für die Dekorpapierlage mindestens zwei mittels Digitaldruck bedruckte Dekorpapierbögen bzw. Dekorpapierbahnen verwendet, die sich hinsichtlich ihres Dekorbildes in Bezug auf Farbe und/oder Druckstruktur unterscheiden. Auf diese Weise können unterschiedliche Dekorbilder, beispielsweise zwei verschiedene Holzdekore wie zum Beispiel ein Ahorn- und ein Eichendekor, miteinander in einem gleichzeitigen Pressvorgang auf einer gemeinsamen Substratlage verpresst werden. Dies ermöglicht eine erhöhte Variantenvielfalt an zu verpressenden Dekorbildern in einem vorgegebenen Arbeitszeitraum.

Bei einer weiteren Ausführungsform wird die Dekorpapierlage dadurch bereitgestellt, dass mindestens drei, vorzugsweise mindestens vier mittels Digitaldruck bedruckte Dekorpapierbögen bzw. Dekorpapierbahnen nebeneinander angeordnet werden. Auf diese Weise kann die Breite der Dekorpapierbögen bzw. -bahnen weiter reduziert werden, so dass schnellere Digitaldrucker verwendbar sind. Werden Dekorbögen bzw. Dekorbahnen verwendet, die sich hinsichtlich ihres Dekorbildes in Bezug auf Farbe und/oder Druckstruktur unterscheiden, lassen sich auf diese Weise zudem verschiedene Dekorbilder, beispielsweise verschiedene Holzdekore, gleichzeitig verwenden. Dies ermöglicht neben einer erhöhten Variantenvielfalt insbesondere auch kleinere Produktionsmengen für ein bestimmtes Dekorbild.

Erfindungsgemäß werden mindestens zwei Dekorpapierbögen bzw. Dekorpapierbahnen entsprechend der auf die Dekorpapierbögen bzw. Dekorpapierbahnen aufgedruckten Dekore beim Anordnen des Stapels in vordefinierter Weise zueinander ausgerichtet, und zwar anhand von auf den Dekorpapierbögen bzw. Dekorpapierbahnen aufgedruckten Ausrichtungsmarkierungen. Auf diese Weise können die Dekore der mindestens zwei Dekorpapierbögen bzw. -bahnen zu einem vordefinierten Gesamtdekor mit einer bestimmten Ausrichtung zueinander zusammengefügt werden.

Die aufgedruckten Ausrichtungsmarkierungen werden vorzugsweise jeweils am Dekorbildrand auf der Längsseite der Dekorpapierbögen bzw. der Dekorpapierbahn positioniert.

Die Ausrichtungsmarkierungen sind vorzugsweise derart ausgestaltet, dass diese Markierungen von einer CCD-Zeilenkamera erkannt und erfasst werden können. Vorzugsweise werden die Bilddaten der Markierungen von einer Computersoftware verarbeitet und eine Maschinensteuerung übernimmt die Positionierung der Dekorpapierbögen bzw. der Dekorpapierbahnen abhängig von den mit der Computersoftware verarbeiteten Bilddaten der Markierung und/oder von einer Benutzereingabe, insbesondere von über den Computer einzugebenden Positionsdaten auf der Substratlage. Somit ist es möglich, die Dekorpapierbögen bzw. -bahnen gemäß ihrer Position an ein in der Presse eingebautes und optional mit einer Struktur strukturierte Pressblech bzw. Pressband auszurichten.

Bei einer weiteren Ausführungsform werden mindestens zwei Dekorpapierbögen bzw. Dekorpapierbahnen entsprechend der auf die Dekorpapierbögen bzw. Dekorpapierbahnen aufgedruckten Dekore beim Anordnen des Stapels in vordefinierter Weise zueinander ausgerichtet, insbesondere anhand der Ausrichtung der Dekorpapierbögen bzw. Dekorpapierbahnen am Rand der Substratlage. Vorzugsweise werden zwei Dekorpapierbögen bzw. -bahnen in ihrer Breite so angepasst bzw. zugeschnitten, dass ihre zusammengelegte Dekorpapierbreite im Wesentlichen der Breite der Substratlage entspricht. So können beispielsweise zwei Dekorpapierbögen von jeweils 1,035 m Breite gemeinsam zu einer einer Substratlage entsprechenden Gesamtbreite von 2,07 m zusammengelegt werden.

Zwischen den Dekorpapierbögen bzw. -bahnen kann sich an der Stoßstelle ihrer Positionierung in der Mitte der Substratlage, d.h. an den Stoßkanten, optional ein Spaltmaß, von einigen Millimetern, beispielsweise 1-2 mm, befinden. Zu diesem Zweck werden die Breiten der Dekorpapierbögen bzw. -bahnen vorzugsweise um einen oder mehrere Millimeter schmaler vorgesehen, in obigem Beispiel z.B. 1,034 m. Auf diese Weise kann eine Beschädigung oder ein Knicken der Dekorpapierbögen bzw. -bahnen verhindert werden. Dies ist insbesondere bei spröden imprägnierten Dekorpapierbögen vorteilhaft.

Bei einer weiteren Ausführungsform weisen die Dekorpapierbögen jeweils eine Breite von weniger als 2 m, insbesondere weniger als 1,5 m auf. Weiterhin weisen die Dekorpapierbögen vorzugsweise jeweils eine Länge von mehr als 2 m, insbesondere mehr als 4 m auf. Die Breite von weniger als 2 m, insbesondere weniger als 1,5 m erlaubt die Herstellung der Dekorpapierbögen unter Verwendung eines Digitaldruckers mit hoher Druckleistung. Da die Dekorbildlänge beim Digitaldruck nicht durch geometrische Vorgaben beschränkt ist, können ohne weiteres Dekorbildlängen von mehr als 2 m, insbesondere mehr als 4 m erzeugt werden. Daher weisen die Dekorpapierbögen vorzugsweise eine entsprechende Länge auf. Besonders bevorzugt weisen die Dekorpapierbögen etwa eine Ganzformatlänge zwischen 5,2 und 5,7 m auf.

Weitere Merkmale und Vorteile der Erfindung ergeben sich aus der nachfolgenden Beschreibung von Ausführungsbeispielen, wobei auf die beigefügte Zeichnung Bezug genommen wird. In der Zeichnung zeigen
- Fig. 1a-b: ein Beispiel eines Verfahrens zur Herstellung eines Laminats aus dem Stand der Technik,
- Fig. 2a-e: ein Ausführungsbeispiel des erfindungsgemäßen Verfahrens zur Herstellung eines Laminats,
- Fig. 3a-b: ein weiteres Ausführungsbeispiel des erfindungsgemäßen Verfahrens zur Herstellung eines Laminats,
- Fig. 4: ein weiteres Ausführungsbeispiel des erfindungsgemäßen Verfahrens zur Herstellung eines Laminats und
- Fig. 5: ein Beispiel von Ausrichtungsmarkierungen zur Ausrichtung zweier Dekorpapierbögen bzw. Dekorpapierbahnen zueinander.

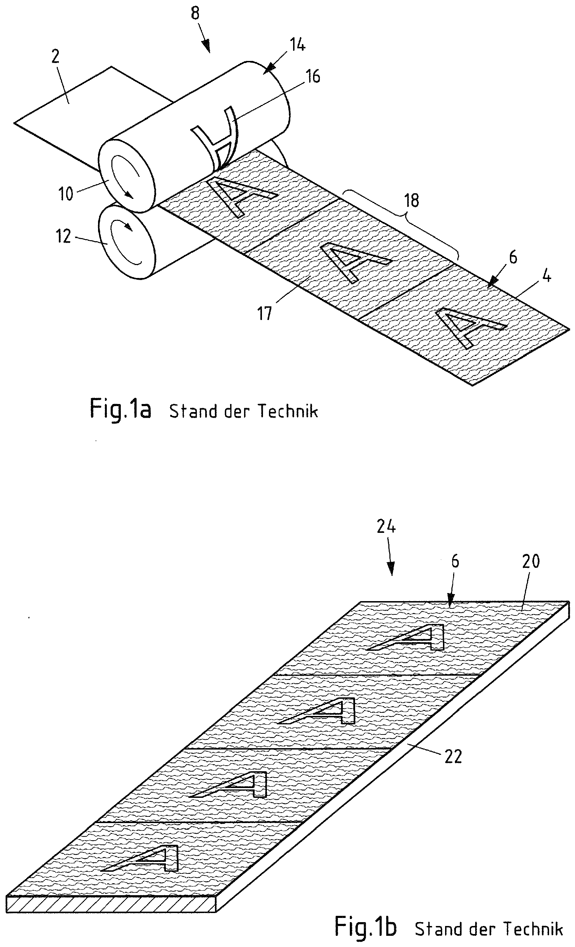

Anhand der Figuren 1a-b wird zunächst ein Verfahren zur Herstellung eines Laminats aus dem Stand der Technik erläutert.

Fig. 1a zeigt zunächst das Bedrucken einer Papierbahn 2 im Walzendruck, um eine bedruckte Dekorpapierbahn 4 mit einem Dekor 6 herzustellen. Die unbedruckte Papierbahn 2 wird zu diesem Zweck zwischen mehreren Walzenpaaren 8 aus jeweils einer Druckwalze 10 und einer Stützwalze 12 durchgeführt, von denen in Fig. 1a ein Walzenpaar dargestellt ist. Die Walzenoberfläche 14 der Druckwalze 10 ist mit einer dem aufzubringenden Dekor 6 entsprechenden Gravur 16 versehen. Beim Druckvorgang wird die Walzenoberfläche 14 mit einer Farbe beaufschlagt (nicht dargestellt), so dass ein der Gravur 16 entsprechendes Dekorbild 17 auf die zwischen den sich drehenden Walzen durchgeführte Papierbahn 2 übertragen wird. Das Dekorbild 17 ist in Fig. 1a jeweils durch einen mit "A" markierten Dekorabschnitt gekennzeichnet. Die Druckwalze 10 dreht sich beim Bedrucken so, dass sich die Walzenoberfläche 14 mit derselben Geschwindigkeit bewegt wie die Papierbahn 2. Zum Auftrag mehrfarbiger Dekore wird die Papierbahn 2 durch mehrere solcher Walzenpaare 8 geführt, mit denen jeweils eine andere Farbe auf die Papierbahn 2 aufgebracht wird. Beispielsweise können vier Walzenpaare 8 für vier Grundfarben vorgesehen sein.

Durch die kontinuierliche Rotation der Druckwalze 10 wiederholt sich das Dekorbild 17 auf der Dekorpapierbahn 4 in gewissen Abständen, die dem Umfang der Druckwalze 10 entsprechen. Diese Abstände werden als Dekorbildlänge 18 bezeichnet. Typische Druckwalzen aus dem Stand der Technik weisen einen Umfang von 1,3 m auf, so dass sich das Dekorbild 17 auf der Dekorpapierbahn entsprechend alle 1,3 m wiederholt. Das Dekorbild 17 hat demnach eine sogenannte Dekorbildlänge von 1,3 m.

Die zuvor bedruckte und getrocknete Dekorpapierbahn 4 wird nach dem Bedrucken in einem separaten, weiteren Arbeitsschritt mit einem Harz imprägniert, getrocknet und in Dekorpapierbögen geschnitten, die entsprechend des Ganzformats eine Länge zwischen 5,2 und 5,7 m, beispielsweise von 5,24 m, aufweisen. Die Breite der Dekorpapierbahn 4 bzw. der daraus geschnittenen Dekorpapierbögen betragen entsprechend der Breite des Ganzformats etwa 2,07 m.

Zur Herstellung eines Laminats, beispielsweise eines Holzwerkstofflaminats, wird ein auf diese Weise hergestellter Dekorpapierbogen 20 auf eine Substratplatte 22 im Ganzformat (5,62 m x 2,07 m) aufgelegt und mit dieser in einer Kurztaktpresse unter Druck- und Temperatureinwirkung zu einem Laminat 24 verpresst, wobei das Harz, mit dem der Dekorpapierbogen 20 imprägniert ist, die Schichten des Laminats miteinander verklebt. Das auf diese Weise hergestellte Laminat 24 ist in Fig. 1b dargestellt. Das Laminat 24 kann nun in eine Mehrzahl von Paneelen geschnitten werden, um hieraus Fußbodenpaneele herzustellen.

Da sich das Dekorbild 17 auf der Dekorpapierbahn 4 alle 1,3 m wiederholt, weist auch das Laminat 24 ein sich mehrfach wiederholendes Dekorbild 17 auf. Daher weisen die aus dem Laminat 24 geschnitten Paneele zum Teil identische oder teilweise identische Dekore auf. Eine häufige Wiederholung von Dekorbildern führt jedoch insbesondere bei Paneelen für Fußböden zu einer unnatürlichen Fußbodenoptik. So sind in diesem Fall bei einer typischen Paneelbreite von 20 cm nur zehn verschiedene Panelltypen möglich.

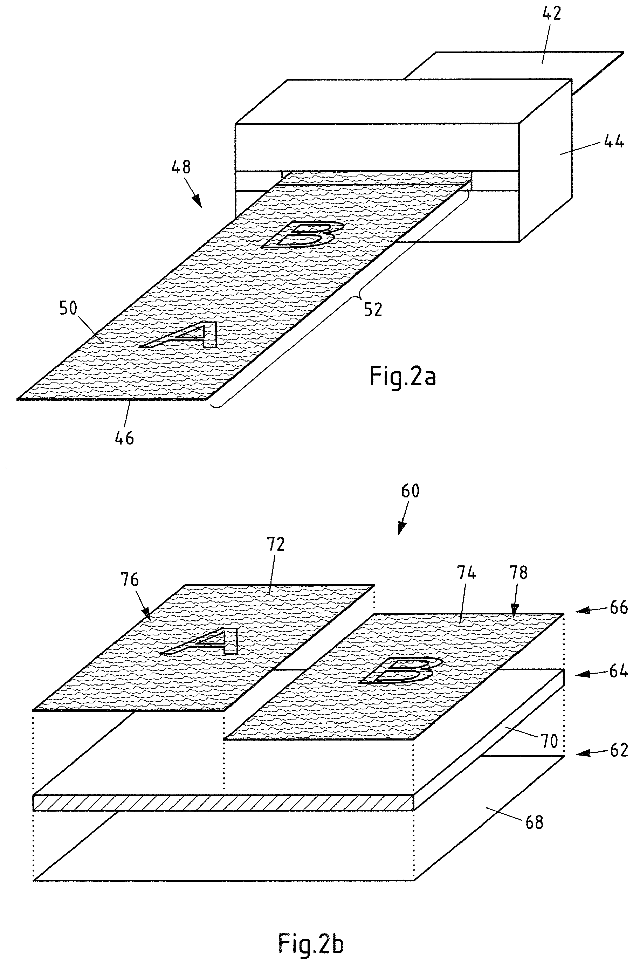

Im Folgenden wird nun anhand der Figuren 2a-e ein Ausführungsbeispiel des erfindungsgemäßen Verfahrens beschrieben.

In dem in Fig. 2a schematisch dargestellten Verfahrensschritt wird zunächst eine Papierbahn 42 durch einen Digitaldrucker 44, zum Beispiel einen Inkjet-Drucker, geführt und dort mittels Digitaldruck bedruckt. Die dadurch entstehende Dekorpapierbahn 46 weist ein individuell einstellbares Dekor 48 mit einem Dekorbild 50 von praktisch beliebig einstellbarer Dekorbildlänge 52 auf. Vorzugsweise weist das Dekorbild 50 eine Dekorbildlänge 52 von mindestens 2,6 m, weiter bevorzugt von mindestens 5,2 m auf, so dass sich das Dekorbild 50 auf der Länge des Ganzformats möglichst selten oder sogar gar nicht wiederholt. Besonders bevorzugt weist das Dekorbild 50 eine Dekorbildlänge 52 von mindestens 10,4 m auf, so dass aus der Dekorpapierbahn 46 zwei aufeinanderfolgende Dekorpapierbögen geschnitten werden können, bei denen weder im Dekor jedes einzelnen dieser Dekorpapierbögen, noch in der Gesamtheit aus beiden Dekoren eine Dekorwiederholung auftritt. Das Dekorbild 50 ist in Fig. 2a durch einen mit "A B" bezeichneten Dekorabschnitt gekennzeichnet. Das Dekorbild 50 kann beispielsweise ein Holzdekor zeigen.

Die Breite der Papierbahn 42 beträgt im vorliegenden Beispiel maximal 1,5 m, vorzugsweise maximal 1,1 m. Für derartige Papierbreiten sind schnelle Digitaldrucker verfügbar, mit denen Druckleistungen von mindestens 1.500 m²/h, vorzugsweise mindestens 3.000 m²/h erreicht werden können, so dass eine wirtschaftliche Produktion ermöglicht wird. Digitalplotter, die für Papierbreiten von über 1,5 m geeignet sind, erlauben hingegen nur Druckleistungen von ca. 300 m²/h und sind daher nicht wirtschaftlich einsetzbar.

Die Dekorpapierbahn 46 wird nach dem Bedrucken mit einem Harz imprägniert und getrocknet und anschließend in einzelne Dekorpapierbögen mit einer Länge von beispielsweise 5,24 m abgelängt.

Im einem nächsten, in Fig. 2b dargestellten Verfahrensschritt wird ein zu verpressender Stapel 60 bereitgestellt, indem eine Gegenzugpapierlage 62, eine Substratlage 64 und eine Dekorpapierlage 66 zum Stapel 60 übereinander angeordnet werden. Fig. 2b zeigt den Stapel 60 in Explosionsdarstellung. Für die Gegenzugpapierlage 62 wird ein mit Harz imprägnierter Papierbogen 68 im Ganzformat verwendet. Bei der Substratlage 64 handelt es sich in diesem Beispiel um eine Holzwerkstofflage. Entsprechend wird für die Substratlage 64 eine Holzwerkstoffplatte 70 im Ganzformat, zum Beispiel eine MDF-Faserplatte, verwendet.

Für die Dekorpapierlage 66 werden in diesem Beispiel zwei aus der Dekorpapierbahn 46 abgelängte Dekorpapierbögen 72, 74 verwendet. Die Dekorpapierbögen 72, 74 weisen entsprechend der Breite der Dekorpapierbahn 46 jeweils etwa die halbe Ganzformatbreite, d.h. vorliegend eine Breite von ca. 1,035 m, sowie die volle Ganzformatlänge von vorliegend 5,24 m auf. Die beiden Dekorpapierbögen 72, 74 werden so nebeneinander angeordnet, dass sie die Substratplatte 70 vollständig bzw. nahezu vollständig mit einem berücksichtigten Stoßmaß von ca. 2 mm zwischen den beiden Dekorpapierbögen 72, 74 bedecken und damit eine Dekorpapierlage 66 im Ganzformat bilden.

Da das Dekorbild 50 der Dekorpapierbahn 46 eine Dekorbildlänge 52 von vorzugsweise mindestens 5,2 m aufweist, weist jeder der Dekorpapierbögen 72, 74 in sich ein wiederholungsfreies Dekor 76, 78 auf, d.h. ein Dekor mit einem Dekorbild, das sich innerhalb des jeweiligen Dekorpapierbogens nicht wiederholt. Vorzugsweise unterscheiden sich zudem die Dekore 76, 78 der beiden Dekorpapierbögen 72, 74 voneinander, und zwar insbesondere derart, dass innerhalb der Dekorpapierlage 66 keine Dekorbildwiederholung auftritt. Dies kann insbesondere dadurch erreicht werden, dass beim Bedrucken der Papierbahn 42 in Fig. 2a eine Dekorbildlänge 52 verwendet wird, die etwa der doppelten Ganzformatlänge oder größer entspricht bzw. mindestens 10,4 m groß ist, und dass zwei unmittelbar nacheinander von der Dekorpapierbahn 46 abgelängte Dekorpapierbögen als Dekorpapierbögen 72, 74 verwendet werden. Dies ist in Fig. 2b dadurch illustriert, dass das Dekorbild "A B" sich auf die beiden Dekorpapierbögen 72, 74 aufteilt. Der Dekorpapierbogen 72 ist daher nur mit "A" und der Dekorpapierbogen 74 mit "B" bezeichnet.

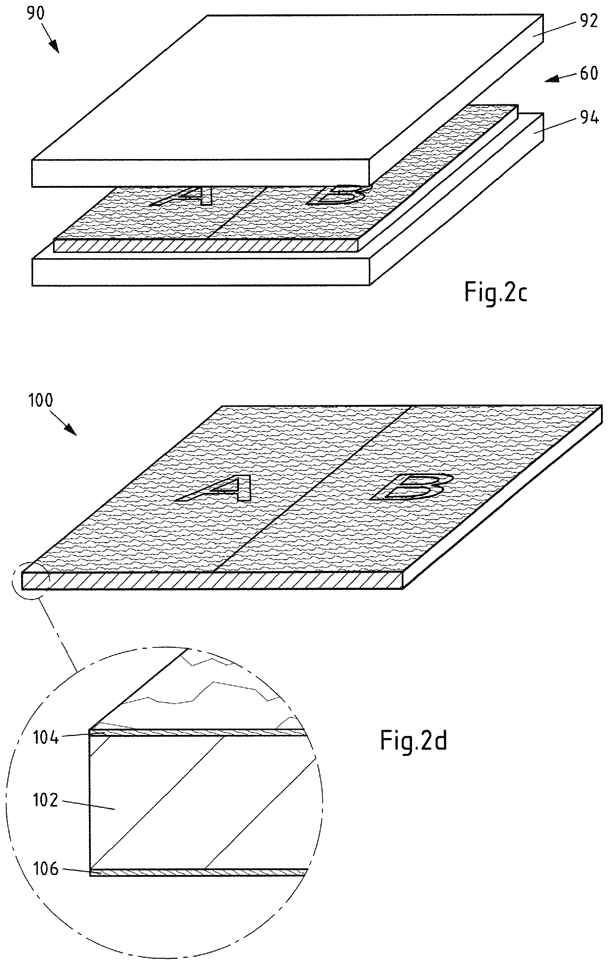

Im nächsten in Fig. 2c dargestellten Schritt wird der Stapel 60 in einer beheizten Kurztaktpresse 90 angeordnet und dort durch Zusammenfahren der beiden Pressenhälften 92, 94 unter Druck- und Wärmeeinwirkung zu dem in Fig. 2d dargestellten Laminat 100 verpresst. Das Harz, mit dem die Dekorpapierbögen 74, 76 und der Gegenzugpapierbogen 68 imprägniert sind, verbindet beim Verpressen die einzelnen Lagen des Stapels 60 miteinander zum Laminat 100.

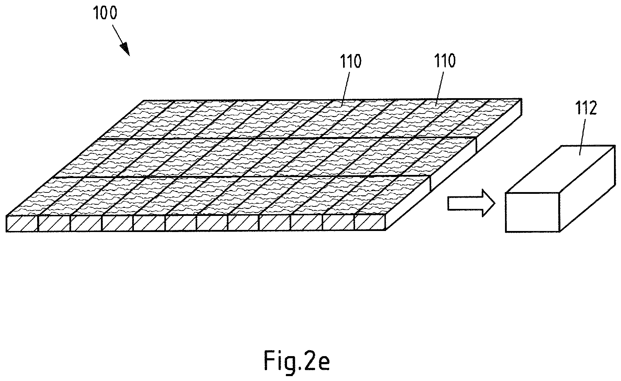

Das verpresste Laminat 100 weist entsprechend einen dreischichtigen Aufbau auf mit einer Holzwerkstoffschicht 102 in der Mitte, einer Dekorschicht 104 auf der Oberseite und einer Gegenzugschicht 106 auf der Unterseite. Zur weiteren Verarbeitung kann das Laminat 100 nun wie in Fig. 2e dargestellt in einzelne Paneele 110 aufgeteilt und nach weiteren Verarbeitungsschritten wie dem Anfräsen von Verbindungskantenprofilen in Paketen 112 zu einem Satz Paneelen 110 konfektioniert werden.

Da die Dekorschicht 104 wenige oder keine Dekorbildwiederholungen aufweist, können aus dem Laminat 100 entsprechend viele Paneele ohne Dekorbildwiederholung hergestellt werden. Dadurch enthalten die konfektionierten Pakete 112 Paneele 110 mit einer größeren Dekorvielfalt, so dass die mit diesen Paneelen 110 verlegten Fußböden eine natürlichere Optik, insbesondere Holzoptik, aufweisen.

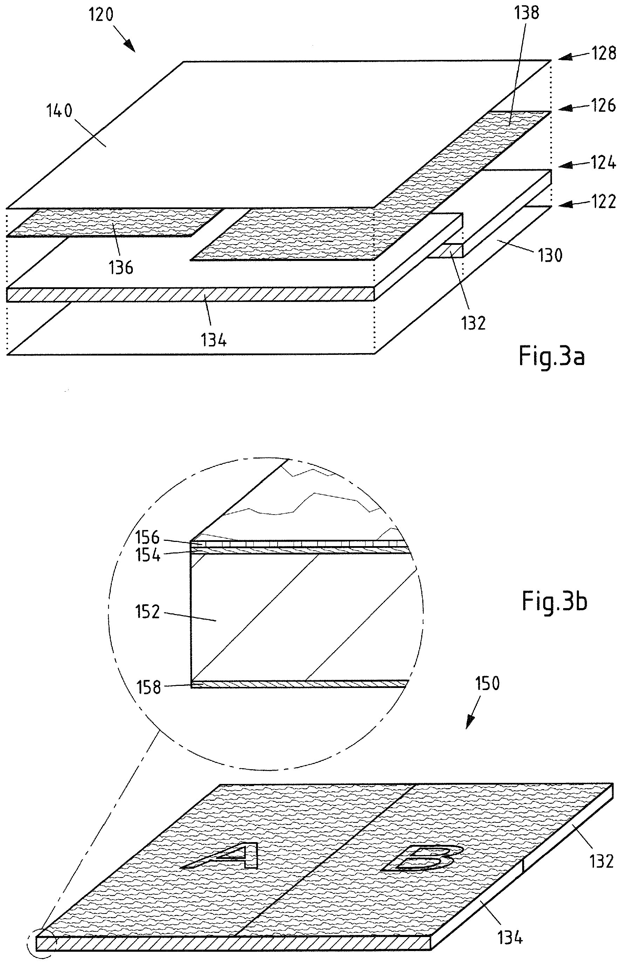

Die Figuren 3a-b zeigen ein zweites Ausführungsbeispiel des Verfahrens. Bei diesem zweiten Ausführungsbeispiel wird ein zu verpressender Stapel 120 bereitgestellt, indem eine Gegenzugpapierlage 122, eine Substratlage 124, eine Dekorpapierlage 126 und eine Overlaypapierlage 128 zum Stapel 120 übereinander angeordnet werden. Fig. 3a zeigt den Stapel 120 in Explosionsdarstellung. Für die Gegenzugpapierlage 122 wird ein mit Harz imprägnierter Papierbogen 130 im Ganzformat verwendet. Für die Substratlage 124 werden zwei Holzwerkstoffplatten 132, 134 mit Halbformatgröße hintereinander angeordnet, so dass sie zusammen die Substratlage 124 mit Ganzformatgröße bilden.

Für die Dekorpapierlage 126 werden zwei aus der Dekorpapierbahn 46 abgelängte Dekorpapierbögen 136, 138 mit etwa halber Ganzformatbreite verwendet, die so nebeneinander angeordnet werden, dass sie die Dekorpapierlage 126 mit Ganzformatbreite bilden.

Für die Overlaypapierlage 128 wird ein Overlaypapierbogen 140 im Ganzformat verwendet. Der Overlaypapierbogen 140 erstreckt sich daher über beide Dekorpapierbögen 136, 138 und verhindert ein Verrutschen der Dekorpapierbögen 136, 138, beispielsweise während der Stapel 120 zu einer Kurztaktpresse transportiert wird. Der Overlaypapierbogen 140 kann mit Harz imprägniert sein und/oder abriebfeste Partikel, beispielsweise Korundpartikel, aufweisen, um eine abriebfeste Oberfläche des herzustellenden Holzwerkstofflaminats zu erreichen.

Der Stapel 120 wird sodann in einer Kurztaktpresse unter Druck- und Wärmeeinwirkung zu dem in Fig. 3b dargestellten Laminat 150 verpresst. Das Harz, mit dem der Gegenzugpapierbogen 130, die Dekorpapierbögen 136, 138 und ggf. der Overlaypapierbogen 140 imprägniert sind, führt beim Verpressen in der Kurztaktpresse zu einer festen Verbindung zwischen den einzelnen Lagen des Stapels 120 bzw. den einzelnen Schichten des Laminats 150.

Das verpresste Laminat 150 weist entsprechend einen vierschichtigen Aufbau auf mit einer Holzwerkstoffschicht 152, einer Dekorschicht 154 und eine Overlayschicht 156 auf der Oberseite der Holzwerkstoffschicht 152 sowie einer Gegenzugschicht 158 auf der Unterseite der Holzwerkstoffschicht 152. Da sich die Gegenzugschicht 158 und die Overlayschicht 156 jeweils über das gesamte Holzwerkstofflaminat 150 erstrecken, halten diese Schichten das Holzwerkstofflaminat 150 trotz der zweigeteilten, aus den Holzwerkstoffplatten 132, 134 bestehenden Holzwerkstoffschicht 152 zusammen.

Das Laminat 150 kann nun wie das Laminat 100 ebenfalls in einzelne Paneele aufgeteilt und nach weiteren Verarbeitungsschritten wie dem Anfräsen von Verbindungskantenprofilen zu Paketen konfektioniert werden.

Da die Dekorschicht 154 wenige oder keine Dekorbildwiederholung aufweist, können auch aus dem Laminat 150 entsprechend viele Paneele ohne Dekorbildwiederholung hergestellt werden, aus denen sich dann Fußböden mit natürlicherer Optik verlegen lassen.

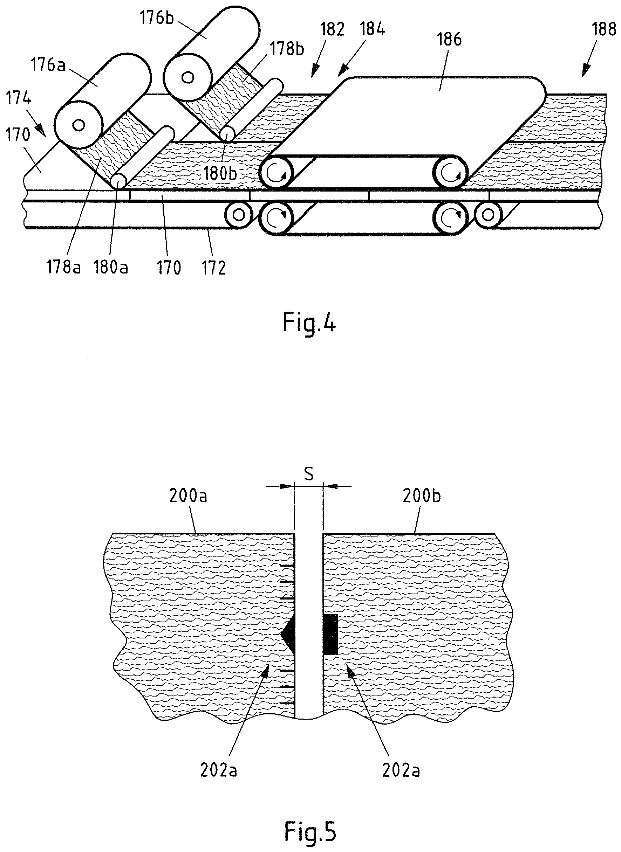

Fig. 4 zeigt ein weiteres Ausführungsbeispiel des erfindungsgemäßen Verfahrens zur Herstellung eines Laminats in schematischer Darstellung.

Bei dem Verfahren werden zunächst einzelne Substratplatten 170, beispielsweise Holzwerkstoffplatten, auf einem Förderband 172 derart hintereinander angeordnet, dass die Substratplatten 170 auf Stoß hintereinander folgen und eine kontinuierliche Substratlage 174 bilden, die Ganzformatbreite aufweist. Von einer ersten und zweiten Rolle 176a-b werden sodann eine erste und zweite Dekorpapierbahn 178a-b mit jeweils halber Ganzformatbreite abgewickelt und über Führungsrollen 180a-b nebeneinander als Dekorpapierlage 182 auf der Substratlage 174 angeordnet. Der auf diese Weise kontinuierlich bereitgestellte Stapel 184 wird anschließend einer Durchlaufpresse 186 in Form einer Bandpresse zugeführt und dort zu einem kontinuierlichen Laminat 188 verpresst. Nach dem Verpressen kann das Laminat 188 beispielsweise zunächst zu Platten und dann in einzelne Paneele geschnitten werden.

Bei den Dekorpapierbahnen 178a-b handelt es sich jeweils um im Digitaldruck bedruckte Papierbahnen mit einer Dekorlänge von mindestens 5,6 m. Auf diese Weise kann ein Laminat 188 mit geringen Dekorwiederholungen hergestellt werden.

Anstelle eines Holzwerkstoffsubstrats können bei den zuvor anhand der Fig. 2 bis 4 beschriebenen Verfahren auch Substrate aus anderen Werkstoffen verwendet werden, beispielsweise aus einem Kunststoff- oder WPC-Werkstoff. Insbesondere kann als Substratlage 64, 124 bzw. 174 auch ein Imprägnat, d.h. ein mit Harz imprägniertes Papier verwendet werden, um zum Beispiel einen Hochdruckschichtstoff oder ein kontinuierlich hergestelltes CPL-Laminat herzustellen.

Zu diesem Zweck kann beispielsweise anstelle der hintereinander angeordneten Substratplatten 170 eine imprägnierte Papierbahn verwendet werden.

Fig. 5 zeigt ein Beispiel für Ausrichtungsmarkierungen zur Ausrichtung zweier Dekorpapierbögen 200a-b bzw. Dekorpapierbahnen zueinander, die auf einer Substratlage angeordnet sind. Die Dekorpapierbögen 200a-b weisen an ihren jeweils gegenüberliegenden Längskanten (Stoßkanten) jeweilige Markierungen 202a-b auf, um die beiden Dekorpapierbahnen in Längsrichtung zueinander ausrichten zu können. Die Markierungen 202a zeigen im dargestellten Beispiel eine dreieckige Markierung zur Positionierung und jeweils drei linienförmige Markierungen zu beiden Seiten zur Abstandsnormierung. Die Markierung 202b zeigt eine rechteckige Markierung. Bei der Ausrichtung der Dekorpapierbögen 200a-b werden die Markierungen 202a-b mittels einer CCD-Zeilenkamera erfasst und ausgewertet. Die Dekorpapierbögen 200a-b werden dann automatisch so zueinander ausgerichtet, dass die Position der dreieckigen Markierung und der rechteckigen Markierung in Längsrichtung übereinstimmt. In Querrichtung, d.h. in Richtung der Breite der Dekorpapierbögen 200a-b verbleibt vorzugsweise ein kleines Spaltmaß S von einigen Millimetern, so dass die Dekorpapierbögen 200a-b nicht unmittelbar aneinander anstoßen.

## Patentansprüche

1. Verfahren zur Herstellung eines Laminats (100, 150,188),
- bei dem ein zu verpressender Stapel (60, 120, 184) bereitgestellt wird, indem mindestens eine Substratlage (64, 124, 174), insbesondere eine Holzwerkstofflage, und eine Dekorpapierlage (66, 126, 182) übereinander angeordnet werden, und
- bei dem der Stapel (60, 120, 184) zu einem Laminat (100, 150, 188) verpresst wird,
- wobei die Breite der Dekorpapierlage (66, 126, 182) an die Breite der Substratlage (64, 124, 174) angepasst ist, so dass die Dekorpapierlage (66, 126, 182) die Substratlage (64, 124, 174) im Wesentlichen in voller Breite überdeckt,
- wobei die Dekorpapierlage (66, 126, 182) dadurch bereitgestellt wird, dass mindestens zwei bedruckte Dekorpapierbögen (72, 74; 136, 138) oder Dekorpapierbahnen (178a-b) nebeneinander angeordnet werden, wobei die mindestens zwei Dekorpapierbögen (72, 74; 136, 138) bzw. mindestens zwei Dekorpapierbahnen (178a-b) mittels Digitaldruck bedruckt sind, so dass die Substratlage (64, 124, 174) im Wesentlichen vollflächig mit einem digitalbedruckten Dekor versehen wird, und
- wobei die mindestens zwei Dekorpapierbögen (72, 74; 136, 138) bzw. Dekorpapierbahnen (178a-b) entsprechend der auf die Dekorpapierbögen (72, 74; 136, 138) bzw. Dekorpapierbahnen (178a-b) aufgedruckten Dekore beim Anordnen des Stapels (60, 120, 184) in vordefinierter Weise zueinander ausgerichtet werden anhand von auf den Dekorpapierbögen bzw. Dekorpapierbahnen aufgedruckten Ausrichtungsmarkierungen (202a-b).

2. Verfahren nach Anspruch 1,
**dadurch gekennzeichnet,**
**dass** die mindestens zwei Dekorpapierbögen (72, 74; 136, 138) jeweils ein Dekor (48, 76) ohne Dekorbildwiederholungen aufweisen bzw. die mindestens zwei Dekorpapierbahnen (178a-b) auf einer Länge von mindestens 2 m, vorzugsweise von mindestens 5,2 m, jeweils ein Dekor ohne Dekorbildwiederholungen aufweisen.

3. Verfahren nach Anspruch 1 oder 2,
**dadurch gekennzeichnet,**
**dass** die Dekore der mindestens zwei Dekorpapierbögen (72, 74; 136, 138) so gewählt sind, dass auf der Dekorpapierlage (66, 126) keine Dekorbildwiederholungen auftreten, bzw. die Dekore der mindestens zwei Dekorpapierbahnen (178a-b) so gewählt sind, dass auf der Dekorpapierlage (182) über eine Länge von mindestens 5,2 m keine Dekorbildwiederholungen auftreten.

4. Verfahren nach einem der Ansprüche 1 bis 3,
**dadurch gekennzeichnet,**
**dass** die Dekorpapierbögen (72, 74; 126, 128) bzw. Dekorpapierbahnen (178a-b) bereitgestellt werden durch ein Verfahren, bei dem eine Papierbahn (42) durch einen Digitaldrucker (44) mit einem Dekorbild (50) bedruckt wird, das eine Dekorbildlänge (52) von mindestens 2,6 m, vorzugsweise von mindestens 5,2 m, besonders bevorzugt von mindestens 10,4 m aufweist.

5. Verfahren nach einem der Ansprüche 1 bis 4,
**dadurch gekennzeichnet,**
**dass** die Substratlage (124, 174) dadurch bereitgestellt wird, dass mindestens zwei Substratplatten (132, 134) hintereinander angeordnet werden.

6. Verfahren nach einem der Ansprüche 1 bis 5,
**dadurch gekennzeichnet,**
**dass** der Stapel (184) kontinuierlich bereitgestellt wird, indem eine kontinuierlich bereitgestellte Substratlage und eine kontinuierlich bereitgestellte Dekorpapierlage übereinander angeordnet werden, wobei die kontinuierlich bereitgestellte Substratlage vorzugsweise dadurch bereitgestellt wird, dass eine Mehrzahl von Substratplatten (170) hintereinander angeordnet werden, und wobei die kontinuierlich bereitgestellte Dekorpapierlage vorzugsweise dadurch bereitgestellt wird, dass mindestens zwei mittels Digitaldruck bedruckte Dekorpapierbahnen (178a-b) nebeneinander angeordnet werden, und dass der kontinuierlich bereitgestellte Stapel (184) kontinuierlich in einer Durchlaufpresse (186) verpresst wird.

7. Verfahren nach einem der Ansprüche 1 bis 6,
**dadurch gekennzeichnet,**
**dass** der zu verpressende Stapel (60,120,184) bereitstellt wird, indem mindestens eine Substratlage (64, 124, 174), eine Dekorpapierlage (66, 126, 182) und mindestens eine weitere Papierlage (62, 122, 128), übereinander angeordnet werden, wobei die weitere Papierlage (62, 122, 128) einen Papierbogen (68, 130, 140) aufweist, der sich über die mindestens zwei Dekorpapierbögen (72, 74; 136, 138) erstreckt, bzw. eine Papierbahn aufweist, die sich über die mindestens zwei Dekorpapierbahnen (178a-b) erstreckt.

8. Verfahren nach Anspruch 7,
**dadurch gekennzeichnet,**
**dass** eine der mindestens einen weiteren Papierlage eine Gegenzugpapierlage (62, 122) ist, die auf der der Dekorpapierlage (66, 126) abgewandten Seite der Substratlage (64, 124) angeordnet ist.

9. Verfahren nach Anspruch 7 oder 8,
**dadurch gekennzeichnet,**
**dass** eine der mindestens einen weiteren Papierlage eine Overlaypapierlage (128) ist, die auf der der Substratlage (124) abgewandten Seite der Dekorpapierlage (126) angeordnet ist.

10. Verfahren nach einem der Ansprüche 1 bis 9,
**dadurch gekennzeichnet,**
**dass** die Dekorpapierbögen (72, 74; 136, 138) bzw. Dekorpapierbahnen (178a-b) jeweils eine Breite von weniger als 2 m, insbesondere weniger als 1,5 m, und eine Länge von mehr als 2 m, insbesondere mehr als 4 m aufweisen.

11. Verfahren nach einem der Ansprüche 1 bis 10,
**dadurch gekennzeichnet,**
**dass** die Substratlage (64, 124, 174) eine Breite zwischen 2 und 2,1 m aufweist und für die Dekorpapierlage (66, 126, 182) zwei Dekorpapierbögen (72, 74; 136, 138) bzw. Dekorpapierbahnen (178a-b) mit einer Breite von jeweils zwischen 0,99 und 1,05 m verwendet werden.

12. Verfahren nach einem der Ansprüche 1 bis 11,
**dadurch gekennzeichnet, dass** sich zwischen den Dekorpapierbögen (72, 74; 136, 138) bzw. -bahnen (178a-b) ein Spaltmaß (S) von 1- 2 mm befindet.

## Claims

1. Method for producing a laminate (100, 150, 188),
- in which a stack (60, 120, 184) to be pressed is provided by arranging at least one substrate layer (64, 124, 174), in particular a wood-based material layer, and a decor paper layer (66, 126, 182) on top of one another, and
- in which the stack (60, 120, 184) is pressed to form a laminate (100, 150, 188),
- wherein the width of the decor paper layer (66, 126, 182) is adapted to the width of the substrate layer (64, 124, 174), so that the decor paper layer (66, 126, 182) covers the substrate layer (64, 124, 174) substantially over its full width,
- wherein the decor paper layer (66, 126, 182) is provided in that at least two printed decor paper sheets (72, 74; 136, 138) or decor paper webs (178a-b) are arranged next to one another, wherein the at least two decor paper sheets (72, 74; 136, 138) or at least two decor paper webs (178a-b) are printed by means of digital printing, so that the substrate layer (64, 124, 174) is equipped with a digitally printed decor over substantially the entire surface, and
- wherein the at least two decor paper sheets (72, 74; 136, 138) or decor paper webs (178a-b) are aligned with each other in a predefined manner in accordance with the decors printed on the decor paper sheets (72, 74; 136, 138) or decor paper webs (178a-b) when arranging the stack (60, 120, 184) by means of alignment markings (202a-b) printed on the decor paper sheets or decor paper webs.

2. Method according to claim 1,
**characterized in that** the at least two decor paper sheets (72, 74; 136, 138) each have a decor (48, 76) without decor image repetitions or **in that** the at least two decor paper webs (178a-b) each have a decor without decor image repetitions over a length of at least 2 m, preferably of at least 5.2 m.

3. Method according to claim 1 or 2,
**characterized in that** the decors of the at least two decor paper sheets (72, 74; 136, 138) are selected in such a way that no decor image repetitions occur on the decor paper layer (66, 126), or **in that** the decors of the at least two decor paper webs (178a-b) are selected in such a way that no decor image repetitions occur on the decor paper layer (182) over a length of at least 5.2 m.

4. Method according to any one of claims 1 to 3,
**characterized in that** the decor paper sheets (72, 74; 126, 128) or decor paper webs (178a-b) are provided by a method in which a paper web (42) is printed by a digital printer (44) with a decor image (50) which has a decor image length (52) of at least 2.6 m, preferably of at least 5.2 m, particularly preferably of at least 10.4 m.

5. Method according to any one of claims 1 to 4,
**characterized in that** the substrate layer (124, 174) is provided by arranging at least two substrate plates (132, 134) one behind the other.

6. Method according to any one of claims 1 to 5,
**characterized in that** the stack (184) is provided continuously by arranging a continuously provided substrate layer and a continuously provided decor paper layer one above the other, the continuously provided substrate layer preferably being provided by arranging a plurality of substrate plates (170) one behind the other, and the continuously provided decor paper layer preferably being provided by arranging next to one another at least two decor paper webs (178a-b) printed by means of digital printing, and **in that** the continuously provided stack (184) is pressed continuously in a continuous press (186).

7. Method according to any one of claims 1 to 6,
**characterized in that** the stack (60, 120, 184) to be pressed is provided by arranging at least one substrate layer (64, 124, 174), one decor paper layer (66, 126, 182) and at least one further paper layer (62, 122, 128) on top of each other, wherein the further paper layer (62, 122, 128) comprises a paper sheet (68, 130, 140) which extends over the at least two decor paper sheets (72, 74; 136, 138) or wherein the further paper layer (62, 122, 128) has a paper web which extends over the at least two decor paper webs (178a-b).

8. Method according to claim 7,
**characterized in that** one of the at least one further paper layer is a backing paper layer (62, 122) which is arranged on the side of the substrate layer (64, 124) facing away from the decor paper layer (66, 126).

9. Method according to claim 7 or 8,
**characterized in that** one of the at least one further paper layer is an overlay paper layer (128) which is arranged on the side of the decor paper layer (126) facing away from the substrate layer (124).

10. Method according to any one of claims 1 to 9,
**characterized in that** the decor paper sheets (72, 74; 136, 138) or decor paper webs (178a-b) each have a width of less than 2 m, in particular less than 1.5 m, and a length of more than 2 m, in particular more than 4 m.

11. Method according to any one of claims 1 to 10,
**characterized in that** the substrate layer (64, 124, 174) has a width of between 2 and 2.1 m and two decor paper sheets (72, 74; 136, 138) or decor paper webs (178a-b) each having a width of between 0.99 and 1.05 m are used for the decor paper layer (66, 126, 182).

12. Method according to any one of claims 1 to 11,
**characterized in that** there is a gap (S) of 1 - 2 mm between the decor paper sheets (72, 74; 136, 138) or webs (178a-b).

## Revendications

1. Procédé de fabrication d'un stratifié (100, 150, 188),
- dans lequel une pile (60, 120, 184) à comprimer est fournie en disposant l'une sur l'autre au moins une couche de substrat (64, 124, 174), en particulier une couche de matériau à base de bois, et une couche de papier décoratif (66, 126, 182), et
- dans lequel la pile (60, 120, 184) est comprimée pour former un stratifié (100, 150, 188),
- la largeur de la couche de papier décoratif (66, 126, 182) étant adaptée à la largeur de la couche de substrat (64, 124, 174), de sorte que la couche de papier décoratif (66, 126, 182) recouvre la couche de substrat (64, 124, 174) sensiblement sur toute sa largeur,
- la couche de papier décoratif (66, 126, 182) étant fournie en disposant au moins deux feuilles de papier décoratif (72, 74 ; 136, 138) ou bandes de papier décoratif (178a-b) imprimées l'une à côté de l'autre, les au moins deux feuilles de papier décoratif (72, 74 ; 136, 138) ou les au moins deux bandes de papier décoratif (178a-b) étant imprimées au moyen d'une impression numérique, de sorte que la couche de substrat (64, 124, 174) est munie d'un décor imprimé numériquement sur sensiblement toute sa surface, et
- dans lequel les au moins deux feuilles de papier décoratif (72, 74 ; 136, 138) ou bandes de papier décoratif (178a-b) sont alignées l'une par rapport à l'autre d'une manière prédéfinie en fonction des décors imprimés sur les feuilles de papier décoratif (72, 74 ; 136, 138) ou bandes de papier décoratif (178a-b) lors de la disposition de la pile (60, 120, 184) à l'aide de repères d'alignement (202a-b) imprimés sur les feuilles de papier décoratif ou bandes de papier décoratif.

2. Procédé selon la revendication 1,
**caractérisé en ce que** les au moins deux feuilles de papier décor (72, 74 ; 136, 138) présentent chacune un décor (48, 76) sans répétition d'image de décor ou les au moins deux bandes de papier décor (178a-b) présentent chacune un décor sans répétition d'image de décor sur une longueur d'au moins 2 m, de préférence d'au moins 5,2 m.

3. Procédé selon la revendication 1 ou 2,
**caractérisé en ce que** les décors des au moins deux feuilles de papier décoratif (72, 74 ; 136, 138) sont choisis de telle sorte qu'aucune répétition d'image décorative n'apparaisse sur la couche de papier décoratif (66, 126), ou les décors des au moins deux bandes de papier décoratif (178a-b) sont choisis de telle sorte qu'aucune répétition d'image décorative n'apparaisse sur la couche de papier décoratif (182) sur une longueur d'au moins 5,2 m.

4. Procédé selon l'une quelconque des revendications 1 à 3,
**caractérisé en ce que** les feuilles de papier décoratif (72, 74 ; 126, 128) ou les bandes de papier décoratif (178a-b) sont préparées par un procédé dans lequel une bande de papier (42) est imprimée par une imprimante numérique (44) avec une image décorative (50) qui présente une longueur d'image décorative (52) d'au moins 2,6 m, de préférence d'au moins 5,2 m, de manière particulièrement préférée d'au moins 10,4 m.

5. Procédé selon l'une quelconque des revendications 1 à 4,
**caractérisé en ce que** la couche de substrat (124, 174) est fournie en disposant au moins deux plaques de substrat (132, 134) l'une derrière l'autre.

6. Procédé selon l'une quelconque des revendications 1 à 5,
**caractérisé en ce que** la pile (184) est fournie en continu en disposant l'une sur l'autre une couche de substrat fournie en continu et une couche de papier décoratif fournie en continu, la couche de substrat fournie en continu étant de préférence fournie en disposant une pluralité de plaques de substrat (170) les unes derrière les autres, et la couche de papier décoratif fournie en continu étant de préférence fournie en disposant l'une à côté de l'autre au moins deux bandes de papier décoratif (178a-b) imprimées au moyen d'une impression numérique, et **en ce que** la pile (184) fournie en continu est comprimée en continu dans une presse continue (186).

7. Procédé selon l'une quelconque des revendications 1 à 6,
**caractérisé en ce que** la pile à comprimer (60, 120, 184) est fournie en superposant au moins une couche de substrat (64, 124, 174), une couche de papier décoratif (66, 126, 182) et au moins une autre couche de papier (62, 122, 128), l'autre couche de papier (62, 122, 128) comprenant une feuille de papier (68, 130, 140) qui s'étend sur les au moins deux feuilles de papier décoratif (72, 74 ; 136, 138) ou, respectivement, comprenant une bande de papier qui s'étend sur les au moins deux bandes de papier décoratif (178a-b).

8. Procédé selon la revendication 7,
**caractérisé en ce que** l'une de ladite au moins une autre couche de papier est une couche de papier de contrebalance (62, 122), qui est disposée sur le côté de la couche de substrat (64, 124) opposé à la couche de papier décoratif (66, 126).

9. Procédé selon la revendication 7 ou 8,
**caractérisé en ce que** l'une de ladite au moins une autre couche de papier est une couche de papier de recouvrement (128) qui est disposée sur le côté de la couche de papier décoratif (126) qui est opposé à la couche de substrat (124).

10. Procédé selon l'une quelconque des revendications 1 à 9,
**caractérisé en ce que** les feuilles de papier décoratif (72, 74 ; 136, 138) ou les bandes de papier décoratif (178a-b) présentent chacune une largeur inférieure à 2 m, notamment inférieure à 1,5 m, et une longueur supérieure à 2 m, notamment supérieure à 4 m.

11. Procédé selon l'une quelconque des revendications 1 à 10,
**caractérisé en ce que** la couche de substrat (64, 124, 174) présente une largeur comprise entre 2 et 2,1 m et **en ce que**, pour la couche de papier décoratif (66, 126, 182), on utilise deux feuilles de papier décoratif (72, 74 ; 136, 138) ou bandes de papier décoratif (178a-b) ayant chacune une largeur comprise entre 0,99 et 1,05 m.

12. Procédé selon l'une quelconque des revendications 1 à 11,
**caractérisé en ce qu'**un espace (S) de 1 à 2 mm se trouve entre les feuilles (72, 74; 136, 138) ou bandes de papier décoratif (178a-b).
